**Europäisches Patentamt**

**European Patent Office**

**Office européen des brevets**

(11) Veröffentlichungsnummer: **0 065 086**
A1

# (12) EUROPÄISCHE PATENTANMELDUNG

(21) Anmeldenummer: **82101982.5**

(22) Anmeldetag: **12.03.82**

(51) Int. Cl.³: **B 60 B 5/02,** B 60 B 17/00,
B 60 B 3/08, F 16 C 15/00

(30) Priorität: 15.05.81 DE 3119500
05.11.81 DE 3143845

(43) Veröffentlichungstag der Anmeldung: **24.11.82**
**Patentblatt 82/47**

(84) Benannte Vertragsstaaten: **AT BE CH DE FR GB IT LI SE**

(71) Anmelder: **Messerschmitt-Bölkow-Blohm Gesellschaft
mit beschränkter Haftung München,
Robert-Koch-Strasse, D-8012 Ottobrunn (DE)**

(72) Erfinder: **Werner, Heinz, Dipl.-Ing., Friedenstrasse 6,
D-8012 Ottobrunn (DE)**
Erfinder: **Günther, Christian, Dr.,
Ludwig-Thoma-Strasse 71, D-8013 Haar (DE)**

(54) **Drehbarer Körper.**

(57) Drehbarer Körper, bei dem ein radial äußerer runder Kranz durch ein Verbindungsglied (2) aus Faserverbundwerkstoff mit radial äußerer Nabe um die Drehachse verbunden ist.

## Drehbarer Körper

Die Erfindung betrifft einen drehbaren Körper nach
dem Oberbegriff des Anspruchs 1.

Es ist Aufgabe der Erfindung, bei einem derartigen
Körper mindestens einige der folgenden Vorteile zu
sichern:

- Minderung seiner Masse,
- Verbesserung seines aerodynamischen Verhaltens,
- Minderung der von ihm beim Betrieb auf das zugehörige Aggregat übertragenen Schwingungen, Stöße
  oder dergleichen,
- Minderung seines Betriebs-Geräusches.

Die Lösung dieser Aufgabe erfolgt erfindungsgemäß
durch die Lehre nach dem Kennzeichen des Anspruchs
1.
Auf jeden Fall wird durch den Einsatz des FVW-Werkstoffs eine beträchtliche Massen-Minderung gegenüber
herkömmlichen Körpern erzielt, die meist vollständig
aus Metall, insbesondere Stahl, bestehen. Metall ist
beim erfindungsgemäßen Körper im allgemeinen nur
noch für diejenigen Abschnitte erforderlich, die mit
anderen Metall-Teilen wie z.B. einer Schiene in Berührung stehen.

Die Massen-Minderung fällt noch stärker aus bei der
Lehre nach den Ansprüchen 8 und 9.

Hierbei ist die Lehre nach dem Anspruch 9 besonders
vorteilhaft, da:

(gegenüber einer Voll-Scheibe aus FVW-Werkstoff) der Schaumstoff beträchtlich leichter als der FVW-Werkstoff ist und die Abdeckung der Aussparungen bzw. ihrer Schaumstoff-Einsätze auf deren Seitenflächen beschränkt, also nicht die gesamte, viel größere Seitenfläche der Scheibe erfaßt ist.

Dabei sichern die Deckplatten nach dem Anspruch 8 bzw. die Abdeckungen nach dem Anspruch 9 sowie die Lehre nach dem Anspruch 15 ein gutes aerodynamisches Verhalten und geringe Betriebs-Geräusche, indem eine Luft-Wirbelbildung weitgehend ausgeschlossen wird, insbesondere ein Pfeif-Geräusch, wie es sonst ähnlich wie von einer Lochsirene auftreten würde. Auf diese Weise wird (auch) der Luftwiderstand beträchtlich verringert, was besonders wichtig ist, wenn das Rad für superschnelle Eisenbahn-Züge von z.B. über 300 km/h eingesetzt wird.

Die Lehre nach den Ansprüchen 3 - 14 ist zwar insbesondere für Eisenbahn-Räder vorgesehen, jedoch kann sie grundsätzlich überall Räder auf Schienen benutzt werden, z.B. auch bei Kranbahnen, die in herkömmlicher Rad-Bauweise bekanntlich ein starkes Betriebs-Geräusch erzeugen.

Zur Ausführung der Lehre nach dem Anspruch 3 wird beim Aufschrumpfen der Kranz erhitzt, so daß er sich radial nach außen ausdehnt, dagegen beim Einschrumpfen die Nabe stark abgekühlt, so daß sie sich radial nach innen zusammenzieht, um problemlos die FVW-Scheibe zwischen Nabe und Kranz einzubringen.

Die Lehre nach den Ansprüchen 6 und 7 dient insbesondere zur Dämpfung der Stöße von Schienen auf Eisenbahn-Wagen.

3 9003/9101 EP 0065086

Die Lehre nach den Ansprüchen 11 - 14 besitzt den besonderen Vorteil, daß hier mit einer schmalen Schnittfläche der Scheibe dennoch eine breite Auflage gesichert wird.

Die Lehre nach den Ansprüchen 16 - 22 ermöglicht in vielen Fällen überhaupt, derartige Räder, Rollen oder dergleichen bei extrem hohen Drehzahlen (z.B. 20 000 $min^{-1}$) einzusetzen, die bisher mit Rädern bzw. Rollen oder dergleichen aus Metall wegen mangelnder Fliehkraft-Festigkeit von Metall nicht erreichbar waren.

Zur weiteren Fliehkraft-Stabilisierung trägt insbesondere die Lehre nach dem Anspruch 18 bei.

Die Lehre nach den Ansprüchen 23 - 27 ist bei Kraftfahrzeugen aller Art anwendbar, z.B. von LKW bis zum Moped.

Grundsätzlich kommt zur Ausführung der Erfindung jeder FVW-Werkstoff in Frage, jedoch werden einige FVW-Werkstoffe, insbesondere aus Kostengründen, bevorzugt, vergleiche die Lehre nach den Ansprüchen 28 - 30.

So könnten z.B. die Fasern des FVW-Werkstoffs auch aus S-Glas (in den USA auch R-Glas genannt) (das besonders mechanisch und thermisch fest ist) oder aus C-Glas (das gegen organische Säuren beständig ist) hergestellt werden, jedoch sind diese beiden Glas-Sorten relativ teuer.

Die Lehre nach den Ansprüchen 31 - 33 sichert quasiisotrope Eigenschaften des FVW-Werkstoffs.

Die Lehre nach dem Anspruch 34 erzielt eine noch bessere Aufnahme von radial wirkenden, insbesondere Flieh-Kräften, aber auch - bei Einsatz des Körpers als Rad - der Radaufstands-Kräfte und -Momente, und damit eine noch höhere Festigkeit bei gleichzeitig gegenseitiger Zentrierung von Nabe und Kranz.

Der dadurch vorgesehene FVW-Strang-Stern wirkt ähnlich wie die herkömmlichen Speichen eines Rades, indem die beiden Hälften jedes Stern-Arms auch im wesentlichen radial verlaufen, ohne jedoch die Nachteile der Speichen wie aufwendige Herstellung durch gesonderte Montage jeder Speiche zu übernehmen, da der (gegebenenfalls bereits mit Kunstharz getränkte) FVW-Strang technologisch bequem kontinuierlich zwischen Nabe und Kranz gewickelt werden kann, wonach sich gegebenenfalls ein Ausgießen des Zwischenraumes des Körpers zwischen Nabe und Kranz mit Kunstharz in einer Form anschließt, was ebenfalls nicht aufwendig ist.

Zudem besteht eine bedeutend größere Freiheit in der Einbringung günstiger dynamischer Eigenschaften in den Körper bzw. in das Rad, als bei bloßer Verwendung von Speichen:

Insbesondere kann eine Körper(Rad)-Eigenschwingungsfrequenz, gekoppelt mit einer bestimmten Eigenschwingungsform, durch entsprechende Wahl der Anzahl der Stern-Arme vorgegeben werden. Bei einer hinreichend großen Anzahl von Stern-Armen liegt auch die Eigenschwingungsfrequenz entsprechend hoch, so daß unerwünschte Schwingungen tieferer Frequenz (Subharmonische) nicht mehr auftreten.

Diese erfindungsgemäß gegebene Entwurfs-Freiheit ist von besonderem Interesse beim Einsatz des erfindungsgemäßen Körpers als Eisenbahn-Rad. Bisher kommt es nämlich unvermeidlich zur sog. Riffel-Bildung an Schienen, d.h. infolge unterschiedlichen Verschleißabtrages zu Riffel-Marken an Schienen, die auf der Fahrfläche in mannigfaltiger Form und verschieden großen, meist gleichmäßigen Abständen entstehende Riffelberge und -täler bilden. Die Schienen-Riffel verursachen ihrerseits Lärm und Verschleiß, so daß die Schienen aufwendigerweise von Zeit zu Zeit abgeschliffen werden müssen.

Da die Entstehung der Schienen-Riffel sehr häufig in Zusammenhang gebracht wird mit hochfrequenten Eigenschwingungsresonanzen, insbesondere der Eigenschwingungsform des Rads, was bei einem gegossenen Rad als Kontinum hingenommen werden muß, bietet sich zur Überwindung der Schienen-Riffel die Erfindung an, indem die Eigenschwingungesfrequenz des Eisenbahn-Rads so hoch eingestellt wird, daß sie höher als die sonst vorhandenen, die Schienen-Riffel verursachenden Frequenzen ist, die nunmehr unterdrückt sind.

Schließlich ergibt sich eine Unterbrechung der Schallbrücke zwischen Radaufstands-Punkt und Rad-Achse mit entsprechender Schalldämpfung.

Der so erfindungsgemäß ausgestaltete Körper ist nicht nur als Schienen-Rad, vor allem Eisenbahn-Rad, einsetzbar, sondern auch als Haspel, Trommel, Rolle, ebenso als Kraftfahrzeug-Rad für Luftreifen und schließlich überall, wo eine Festigkeit bei hohen Drehzahlen erforderlich ist, z.B. auch im Zentrifugen-Bau.

Die azimutalen Stege nach dem Anspruch 37 sind gewissermaßen nur azimutal verbreitete Bolzen nach Anspruch 36.

Die einstückige Ausbildung der azimutalen Stege mit dem Kranz nach Anspruch 38 kann z.B. durch Guß erfolgen, was auch für die einstückige Ausbildung der Sicherungselemente mit der Nabe nach Anspruch 40 gilt.

Die Sicherungselemente nach dem Anspruch 46 dienen auch zum Sichern der Kunstharz-Scheibe gegen ein azimutales Verrutschen auf der Nabe, wenn der Körper stark abgebremst wird.

Anhand der Zeichnung wird die Erfindung beispielsweise näher erläutert: Es zeigen

Fig. 1    einen radialen Teil-Schnitt durch ein erstes Eisenbahn-Rad;

Fig. 1a   (ebenfalls in radialem Teil-Schnitt) eine Abwandlung des Eisenbahn-Rads von Fig. 1;

Fig. 2    einen radialen Teil-Schnitt durch ein weiteres Eisenbahn-Rad;

Fig. 2a   (ebenfalls in radialem Teil-Schnitt) eine Abwandlung bzw. Ergänzung des Eisenbahn-Rads von Fig. 2;

Fig. 3    einen radialen Teil-Schnitt durch ein schnell laufendes Rad;

Fig. 4    einen radialen Teil-Schnitt durch ein KFZ-Rad;

Fig. 4a eine Abwandlung des KFZ-Rads von Fig. 4, nämlich mit asymmetrischer anstatt symmetrischer
Felge;

Fig. 5 mit ihren Fasern verschieden gerichtete, übereinanderliegende Fasergewebe-Lagen von FVW-
Werkstoff;

Fig. 6 eine Draufsicht auf ein weiteres Ausführungsbeispiel des drehbaren Körpers in Form eines
Eisenbahn-Rads;

Fig. 7 einen Schnitt A-A von Fig. 6;

Fig. 8 eine abgewandelte Einzelheit von Fig. 7;

Fig. 9 eine noch stärker abgewandelte Einzelheit des
Ausführungsbeispiels von Fig. 6 und 7.

In der Zeichnung sind gegebenenfalls vorhandene Bolzen jeweils nur schematisch durch eine Strichpunktlinie angedeutet. Bei diesen Bolzen kann es sich insbesondere um Befestigungsschrauben oder Nieten handeln,
die entsprechende Öffnungen durchsetzen, die in der
Zeichnung ebenfalls nicht näher ausgeführt sind.

Außerdem ist jeweils durch einen Strichpunktlinie A
die Drehachse des drehbaren Körpers angedeutet.

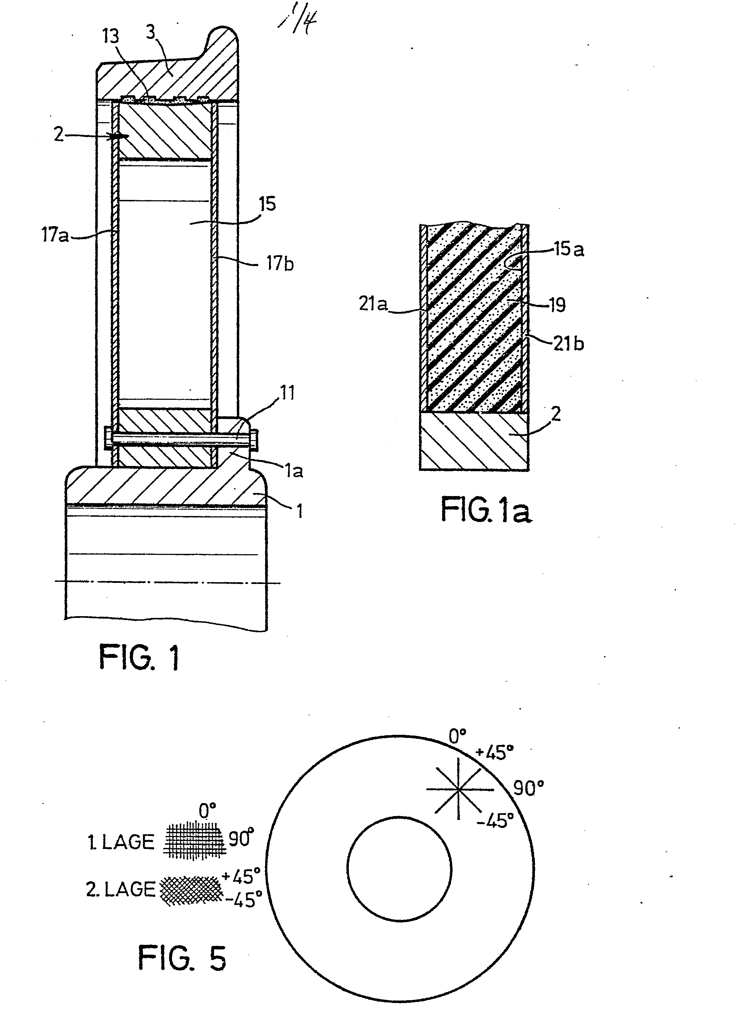

Fig. 1 zeigt einen Körper in Form eines Schienen-,
nämlich Eisenbahn-Rads, wobei eine Nabe 1 und ein
Kranz 2 aus Metall durch eine Scheibe aus Faserverbundwerkstoff verbunden sind, indem die Nabe 1 in die
Scheibe 2 eingeschrumpft und der Kranz 3 auf die
Scheibe 2 aufgeschrumpft sind. Die Scheibe 2 ist durch Bolzen 11 mit einem Flansch 1a der Nabe 1 verbunden. Die Scheibe 2 ist mit dem Kranz 3 durch einen Spleiß-Kleber 13 oder durch ein Polylurethan-Elastomer verbunden, das Vulkollan (der Fa. Bayer Farbenfabriken AG) ist. Die Scheibe 2 besitzt durchgehende Aussparungen 15 und an beiden Seitenflächen je eine Deckplatte 17a, b.

Gemäß Fig. 1a besitzt die Scheibe 2 Schaumstoff-Einsätze 19 in entsprechenden durchgehenden Aussparungen 15a und Abdeckungen 21a, 21b nur an den beiden Seiten der Schaumstoff-Einsätze 19.

Die Deck-Platten 17a, 17b bzw. die Abdeckungen 21a, 21b sind jeweils aufgeklebt.

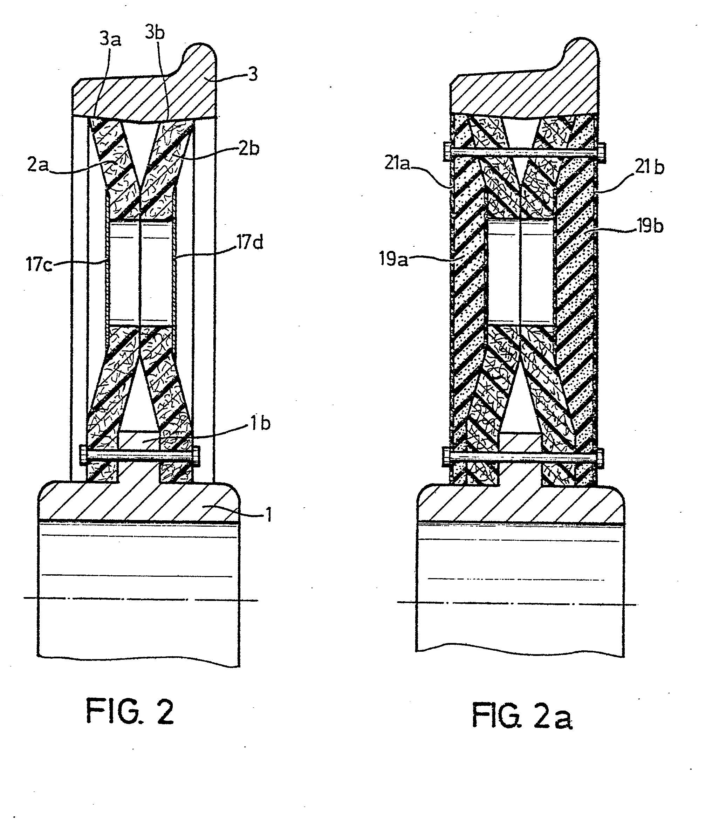

Gemäß Fig. 2 besteht die Scheibe 2 aus zwei Scheiben-Hälften 2a, 2b, die jeweils an beiden Rändern zur Nabe 1 und zum Kranz 3 divergieren. Die Scheiben-Hälften 2a, 2b sind an ihren divergierenden Rändern mit schrägen Flächen 3a, 3b des Kranzes 3 bzw. einem mittigen Flansch 1b der Nabe 1 verbunden und mit ihren radial äußeren divergierenden Rändern in den Kranz 3 eingepreßt bzw. eingeklemmt. Die Deck-Platten 17c, 17d bedecken die beiden Scheiben-Hälften 2a, 2b nur außerhalb deren divergierender Ränder.

Die Abwandlung von Fig. 2a besteht darin, daß das Rad bis zu vollen Breite des Kranzes 3 mit Faserverbundwerkstoff-Platten 21a, b verschlossen ist, und daß der Zwischenraum zwischen der Scheibe 2 und den FVW-Platten 21a, b mit Schaumstoff 19a, b ausgefüllt ist.

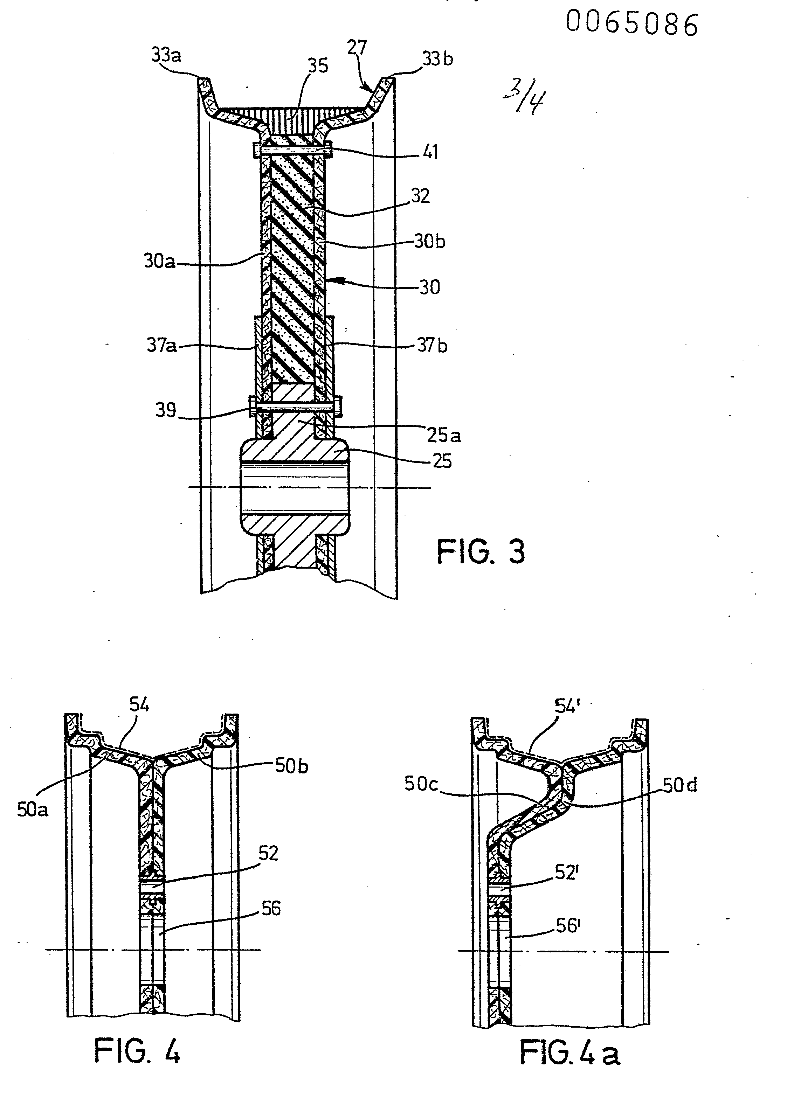

Fig. 3 zeigt einen Körper in Form eines schnell laufenden Rads oder dergleichen (Haspel, Trommel, Rolle), um das (nicht gezeigtes) strangförmiges Gut wie Zugmittel, Fäden, Drähte oder dergleichem umläuft bzw.
von ihm abgewickelt wird. Die Scheibe 30 besitzt zwei
dünne Scheiben-Hälften 30a, 30b, die durch einen
Schaumstoff-Abstands-Halter 32 getrennt sind. Der
Kranz 27 ist durch divergierende radial äußere Ränder
33a, 33b der beiden Scheiben-Hälften 30a, 30b und weiter durch Radial-Lagen 35, die zwischen den beiden divergierenden Rändern der Scheiben-Hälften angeordnet
sind und aus Faserverbundwerkstoff (FVW) bestehen, gebildet. Die Scheiben-Hälften sind mit einem mittigen
Flansch 25a der Nabe 25 verbunden, und im Bereich dieser Verbindungsstelle ist außen auf sie je ein Deckel
37a, 37b aufgeklebt. Der mittige Flansch 25a der Nabe
25, die Scheiben-Hälften 30a, 30b und die Deckel 37a,
37b sind von Bolzen 39 zusammengehalten. Die Scheiben-
Hälften 30a, 30b und der Schaumstoff-Abstandshalter
sind nahe ihrem radial äußeren Rand von Bolzen 41 zusammengehalten und mit dem Schaumstoff-Abstandshalter
32, den Deckeln 37a, 37b und dem mittigen Flansch 25a
der Nabe 25 jeweils verklebt.

Fig. 4 und 4a zeigen einen Körper in Form eines Kraftfahrzeug-Rads für Luftreifen, dessen Scheibe und dessen Kranz (Felge) durch zwei miteinander verklebte
Hälften 50a, 50b; 50c, 50d gebildet sind. Die Hälften
sind jeweils durchsetzt von eingeklebten Stahlbuchsen
52, 52' für Schraubverbindungen und besitzen jeweils
an der radial äußeren Fläche ihres Kranz(Felgen)-Abschnittes eine Beschichtung 54, 54' aus Gel-Coat (abriebfestem, angedicktem Harz) und dünnem Vlies. Das
angedickte Harz des Gel-Coats ist mit Glasfasern, Aerosil (der Fa. Degussa – feiner hochdisperser Kieselgursäure) oder Gesteinsmineralien gefüllt. Die Scheiben-hälften 50a, 50b; 50c, 50d besitzen jeweils durchgehende Aussparungen 56, 56'.

Zu den verwendbaren Faserverbundwerkstoffen und Schaumstoffen wird auf die Ansprüche und die Beschreibungs-
Einleitung verwiesen.

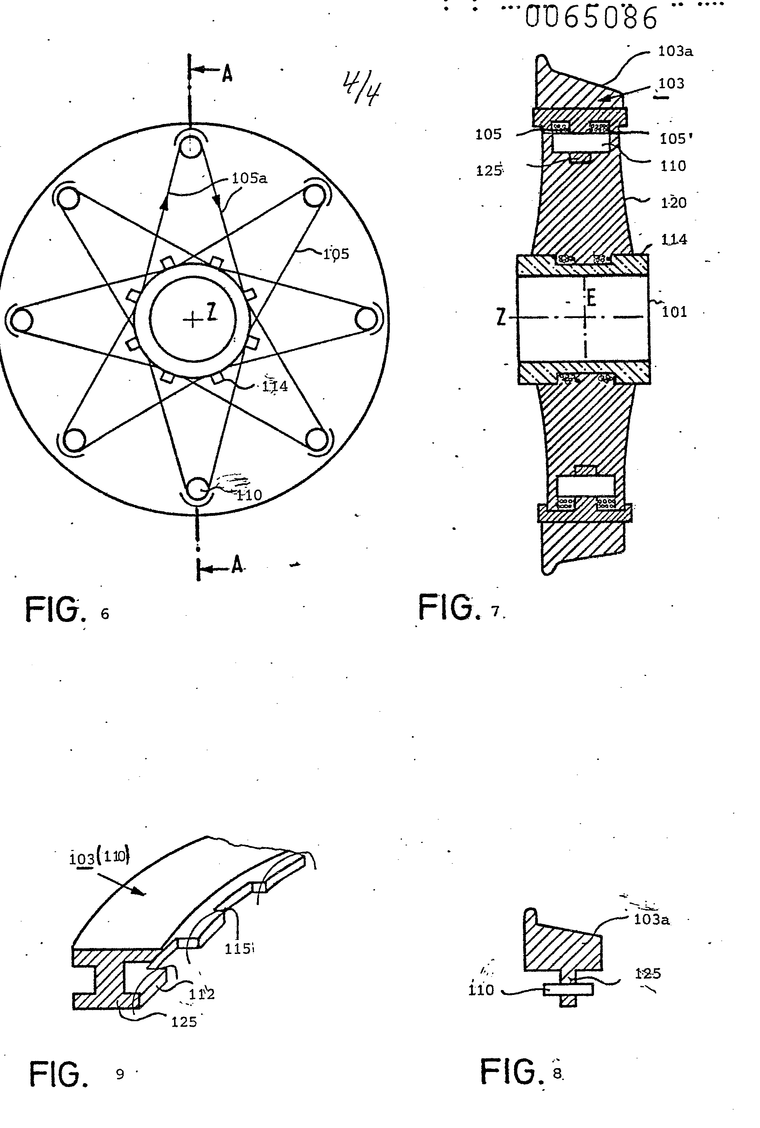

Ergänzend zeigt die Fig. 5 im einzelnen ein Beispiel
von mehreren unterschiedlich gerichteten Fasergewebe-
Lagen. Die Faser-Richtung/en betragen nacheinander + 45°,
0°, - 45°, 90°.
Es seien jetzt F i g. 6 - 10 erläutert.
Eine Nabe 101 ist mit einem noch genauer zu erläuternden Kranz 103 durch zwei Faserverbundwerkstoff(FVW)-
Stränge 105 und 105' verbunden, die im wesentlichen
sternförmig von der Nabe 101 zum Kranz 103 verlaufen.

Der FVW-Strang 105 ist kontinuierlich von der Nabe 101
zu Befestigungselementen in Form von Bolzen 110 am
Kranz 103 gewickelt, wobei die Pfeilrichtung jeweils
die Wicklungsrichtung zeigt.

Anstelle der Bolzen 110 können gemäß Fig. 9 azimutale
Stege 112 vorgesehen sein, die einstückig mit dem
Kranz ausgebildet sind.

Die Nabe 101 besitzt ferner einstückige Sicherungselemente in Form axialer Rippen 114 an beiden Enden, um
ein Verrutschen der FVW-Stränge 105 und 105' in Achsrichtung des Körpers zu verhindern.

Beim abgebildeten Ausführungsbeispiel sind die FVW-
Stränge 105 und 105' in eine Kunstharz-Scheibe 120 eingebettet, die erzeugt wird, indem die Einheit von Nabe
101, Kranz 103 und dazwischen gewickelten FVW-Strängen
105 und 105' in eine Form eingelegt wird, in die dann zur Herstellung des eigentlichen Faserverbundwerkstoffs Kunstharz eingefüllt wird; d.h., die FVW-Stränge 105 und 105' sind zunächst noch nicht mit Kunstharz
durchtränkt.

Je nach Anwendungsfall kann aber auf das Vorsehen einer derartigen Kunstharz-Scheibe 120 verzichtet werden, die FVW-Stränge 105 und 105' werden bereits harzdurchtränkt sternförmig zwischen die Nabe 101 und den Kranz
103 gewickelt.

Bei Vorsehen der Kunstharz-Scheibe 120 dienen die axialen Rippen 114 auch zur Sicherung gegen ein Verrutschen der Kunstharz-Scheibe 120 auf der Nabe 101 bei
starkem Abbremsen.

Ausweislich Fig. 7 besteht der Kranz 103 aus einem
Lauf-Kranz 103a und einem Metall-Ring 110, auf den vorzugsweise der Lauf-Kranz 103a aufgeschrumpft ist.

Der Metall-ring 110 besitzt einen radialen Ansatz 125,
der die Bolzen 110 bzw. die azimutalen Stege 112
trägt. Der Ansatz 125 verläuft in der axialmittigen
Ebene E.

Bei der Einzelheit gemäß Fig. 8 ist der Metall-Ring
110 weggelassen, so daß die Befestigungselemente 110
unmittelbar am Lauf-Kranz 103a angeordnet sind.

Drehbarer Körper


P a t e n t a n s p r ü c h e


1.  Drehbarer Körper, bei dem ein radial äußerer runder Kranz durch ein Verbindungsglied mit radial
    innerer Nabe um die Drehachse verbunden ist, da-
    durch  g e k e n n z e i c h n e t , daß das Ver-
    bindungsglied im wesentlichen aus Faserverbundwerk-
    stoff (FVW) besteht.


2.  Körper nach Anspruch 1, dadurch  g e k e n n -
    z e i c h n e t , daß der Kranz und/oder   die Nabe
    im wesentlichen aus Faserverbundwerkstoff (FVW)
    bestehen.


3.  Körper nach Anspruch 1 in Form eines Schienen-,
    insbesondere Eisenbahn-Rads mit einer Scheibe als
    Verbindungsglied, wobei die Nabe und der Kranz aus
    Metall bestehen, dadurch  g e k e n n z e i c h -
    n e t , daß die Nabe (1) in die Scheibe (2) eingeschrumpft und der Kranz (3) auf die Scheibe (2)
    aufgeschrumpft ist (Fig. 1).


4.  Rad nach Anspruch 3, dadurch  g e k e n n -
    z e i c h n e t , daß die Scheibe (2) durch Bolzen
    (11) mit einem Flansch (1a) der Nabe (1) verbunden
    ist (Fig. 1).


5.  Rad nach Anspruch 3 oder 4, dadurch  g e k e n n -
    z e i c h n e t , daß die Scheibe (2) mit dem
    Kranz (3) durch einen Spleiß-Kleber (13) verbunden
    ist (Fig. 1).

6. Rad nach Anspruch 3 oder 4, dadurch g e k e n n -
z e i c h n e t , daß die Scheibe (2) mit dem
Kranz (3) durch ein Polyurethan-Elastomer verbunden ist (Fig. 1).

7. Rad nach Anspruch 6, dadurch g e k e n n -
z e i c h n e t , daß das Polyurethan-Elastomer
Vulkollan (der Fa. Bayer Farbenfabriken AG) ist
(Fig. 1).

8. Rad nach einem der Ansprüche 3 bis 7, dadurch
g e k e n n z e i c h n e t , daß die Scheibe
(2) besitzt: durchgehende Aussparungen (15) und
an beiden Seitenflächen je eine Deck-Platte (17a,
b) (Fig. 1).

9. Rad nach einem der Ansprüche 3 bis 7, dadurch
g e k e n n z e i c h n e t , daß die Scheibe
(2) besitzt: Schaumstoff-Einsätze (19) in entsprechenden durchgehenden Aussparungen (15a) und Abdeckungen (21a, 21b) nur an den beiden Seiten
der Schaumstoff-Einsätze (19) (Fig. 1a).

10. Rad nach Anspruch 8 oder 9, dadurch g e -
ze i c h n e t , daß die Deck-Platten (17a, 17b)
bzw. die Abdeckungen (21a, 21b) jeweils aufgeklebt sind (Fig. 1; 1a).

11. Rad nach einem der Ansprüche 3 bis 10, dadurch
g e k e n n z e i c h n e t , daß die Scheibe
(2) aus zwei Scheiben-Hälften (2a, 2b) besteht,
die jeweils an beiden Rändern zur Nabe (1) und
zum Kranz (3) divergieren (Fig. 2).

12. Rad nach Anspruch 11, dadurch g e k e n n -
z e i c h n e t , daß die Scheiben-Hälften (2a,
2b) an ihren divergierenden Rändern verbunden
sind mit: schrägen Flächen (3a, 3b) des Kranzes
(3) bzw. einem mittigen Flansch (1b) der Nabe
(1) (Fig. 2).

13. Rad nach Anspruch 11 oder 12, dadurch g e -
k e n n z e i c h n e t , daß die beiden Scheiben-
Hälften (2a, 2b) mit ihren radial äußeren divergierenden Rändern in den Kranz (3) eingepreßt
bzw. eingeklemmt sind (Fig. 2).

14. Rad nach einem der Ansprüche 11 bis 13 mit 9,
dadurch g e k e n n z e i c h n e t , daß die
Deck-Platten (17c, 17d) die beiden Scheiben-Hälften (2a, 2b) nur außerhalb deren divergierender
Ränder bedecken (Fig. 2).

15. Rad nach einem der Ansprüche 3 bis 14, dadurch
g e k e n n z e i c h n e t , daß das Rad bis
zur vollen Breite des Kranzes (3) mit Faserverbundwerkstoff-Platten (21a, b) verschlossen ist,
und daß der Zwischenraum zwischen der Scheibe
(2) und den FVW-Platten (21a, b) mit Schaumstoff
(19a, b) ausgefüllt ist (Fig. 2a).

16. Körper nach Anspruch 1 oder 2 in Form eines
schnell laufenden Rads oder dergleichen (Haspel,
Trommel, Rolle) mit einer Scheibe als Verbindungsglied, um das strangförmige Gut wie Zugmittel,
Fäden, Drähte oder dergleichen umläuft bzw. von
ihm abgewickelt wird, dadurch g e k e n n -
z e i c h n e t , daß die Scheibe (30) besitzt:
zwei dünne Scheiben-Hälften (30a, 30b), getrennt
durch einen Schaumstoff-Abstandshalter (32) (Fig.
3).

17. Rad nach Anspruch 16, dadurch g e k e n n -
z e i c h n e t , daß der Kranz (27) gebildet
ist durch: divergierende radial äußere Ränder
(33a, 33b) der beiden Scheiben-Hälften (30a, 30b)
(Fig. 3).

18. Rad nach Anspruch 17, dadurch g e k e n n -
z e i c h n e t , daß der Kranz (27) weiter gebildet ist durch: Radial-Lagen (35), die zwischen
den beiden divergierenden Rändern der Scheiben-
Hälften (33a, 33b) angeordnet sind und aus Faserverbundwerkstoff (FVW) bestehen (Fig. 3).

19. Rad nach einem der Ansprüche 16 bis 18, dadurch
g e k e n n z e i c h n e t , daß die Scheiben-
Hälften (33a, 33b) mit einem mittigen Flansch
(25a) der Nabe (25) verbunden sind und im Bereich
dieser Verbindungsstelle außen auf sie je ein
Deckel (37a, 37b) aufgeklebt ist (Fig. 3).

20. Rad nach Anspruch 19, dadurch g e k e n n -
z e i c h n e t , daß der mittige Flansch (25a)
der Nabe (25), die Scheiben-Hälften (30a, 30b)
und die Deckel (37a, 37b) von Bolzen (39) zusammengehalten sind (Fig. 3).

21. Rad nach einem der Ansprüche 16 bis 20, dadurch
g e k e n z e i c h n e t , daß die Scheiben-
Hälften (30a, 30b) und der Schaumstoff-Abstands-
halter (32) nahe ihrem radial äußeren Rand von
Bolzen (41) zusammengehalten sind (Fig. 3).

22. Rad nach einem der Ansprüche 19 bis 21, dadurch g e k e n n z e i c h n e t , daß die Scheiben-Hälften (30a, 30b) mit dem Schaumstoff-Abstandshalter (32), den Deckeln (37a, 37b) und dem mittigen Flansch (25a) der Nabe (25) jeweils verklebt sind (Fig. 3).

23. Körper nach Anspruch 1 oder 2 in Form eines Kraftfahrzeug-Rads für Luftreifen mit einer Scheibe als Verbindungsglied, dadurch g e k e n n - z e i c h n e t , daß die Scheibe und der Kranz (die Felge) gebildet sind durch: zwei miteinander verklebte Hälften (50a, 50b; 50c, 50d) (Fig. 4; 4a).

24. Rad nach Anspruch 23, dadurch g e k e n n - z e i c h n e t , daß die Hälften (50a, 50b; 50c, 50d) jeweils durchsetzt sind von eingeklebten Stahlbuchsen (52; 52') für Schraubverbindungen (Fig. 4; 4a).

25. Rad nach Anspruch 23 oder 24, dadurch g e - z e i c h n e t , daß die Scheiben-Hälften (50a, 50b; 50c, 50d) jeweils an der radial äußeren Fläche ihres Kranz(Felgen)Abschnitts eine Beschichtung (54, 54') aus Gel-Coat (abriebfestem, angedicktem Harz) und dünnem Vlies besitzten (Fig. 4; 4a).

26. Rad nach Anspruch 25, dadurch g e k e n n - z e i c h n e t , daß das angedickte Harz des Gel-Coats mit Glasfasern, Aerosil (der Fa. Degussa feiner hochdisperser Kieselgursäure) oder Gesteinsmineralien gefüllt ist (Fig. 4; 4a).

0065086

27. Rad nach einem der Ansprüche 23 bis 26, dadurch
g e k e n n z e i c h n e t , daß die Scheiben-
Hälften (50a, 50b;, 50c, 50d) jeweils durchgehende Aussparungen (56, 56') besitzen (Fig. 4; 4a).

28. Körper nach einem der vorhergehenden Ansprüche,
dadurch g e k e n n z e i c h n e t , daß der
Faserverbundwerkstoff als Grundstoff (Matrix)
ein hochfestes, temperaturbeständiges Epoxid-
Harz, Polyester-Harz oder Phenol-Harz besitzt.

29. Körper nach Anspruch 28, dadurch g e k e n n -
z e i c h n e t , daß der Faserverbundwerkstoff
als Fasern E-Glasfasern oder Aramid-Fasern besitzt.

30. Körper nach Anspruch 28, bezogen auf einen der
Ansprüche 16 bis 22, dadurch g e k e n n -
z e i c h n e t , daß der Faserverbundwerkstoff
als Fasern Kohlenstoff-Fasern besitzt (CFK).

31. Körper nach einem der vorhergehenden Ansprüche,
dadurch g e k e n n z e i c h n e t , daß der
Faserverbundwerkstoff mehrere unterschiedlich gerichtete Fasergewebe-Lagen besitzt (Fig. 5).

32. Körper nach Anspruch 31, dadurch g e k e n n -
z e i c h n e t , daß die Faser-Richtungen nacheinander betragen: - + 45$^{\circ}$, 0$^{\circ}$, - 45$^{\circ}$, 90$^{\circ}$ (Fig.
5).

33. Körper nach Anspruch 9 oder 14, dadurch g e -
k e n n z e i c h n e t , daß der Schaumstoff
leichtes PVC oder Polyurethan-Schaum ist.

34. Drehbarer Körper nach Anspruch 1, dadurch  g e -
    k e n n z e i c h n e t , daß das Verbindungs-
    glied mindestens einen Faserverbundwerkstoff-
    (FVW)-Strang (105) besitzt, der im wesentlichen
    sternförmig von der Nabe (101) zum Kranz (103)
    verläuft.

35. Körper nach Anspruch 34, dadurch  g e k e n n -
    z e i c h n e t , daß der FVW-Strang (105) als
    Stern-Arme (105a) jeweils Umschlingungen besitzt: eines Befestigungselements am Kranz (103)
    und der Nabe (101) auf einem größeren Umfangswinkel.

36. Körper nach Anspruch 35, dadurch  g e k e n n -
    z e i c h n e t , daß die Befestigungselemente
    Bolzen (110) sind.

37. Körper nach Anspruch 35, dadurch  g e k e n n -
    z e i c h n e t , daß die Befestigungselemente
    azimutale Stege (112) sind (Fig. 9).

38. Körper nach Anspruch 37, dadurch  g e k e n n -
    z e i c h n e t , daß die azimutalen Stege (112)
    einstückig mit dem Kranz (103) ausgebildet sind.

39. Körper nach einem der Ansprüche 34 bis 35, da-
    durch  g e k e n n z e i c h n e t , daß die Na-
    be (101) axiale Sicherungselemente zum Sichern
    des FVW-Strangs (105) in Drehachsen(Z)-Richtung
    besitzt.

40. Körper nach Anspruch 39, dadurch g e k e n n -
    z e i c h n e t , daß die Sicherungselemente
    (114) einstückig mit der Nabe (101) ausgebildet
    sind.

41. Körper nach einem der Ansprüche 34 bis 40,
    g e k e n n z e i c h n e t durch eine Kunst-
    harz-Scheibe (120), die den Zwischenraum zwischen dem Kranz (103) und der Nabe (101) zusammen mit dem FVW-Strang (105) ausfüllt.

42. Körper nach Anspruch 40, dadurch g e k e n n -
    z e i c h n e t , daß die Kunstharz-Scheibe
    (120) ein formschlüssiger Ausguß des Zwischenraums zwischen dem Kranz (103) und der Nabe
    (101) einschließlich Durchtränkung des harzgetränkten Faser-Strangs (105) ist.

43. Körper nach einem der Ansprüche 34 bis 42, g e -
    k e n n z e i c h n e t durch mehrere FVW-Strän-
    ge jeweils in einer eigenen Fläche im wesentlichen senkrecht zur Drehachse (Z).

44. Körper nach Anspruch 43, g e k e n n z e i c h -
    n e t durch zwei FVW-Stränge (105, 105') in
    zwei Flächen symmetrisch zur axialmittigen Ebene
    (E) des Körpers.

45. Körper nach Anspruch 44, dadurch g e k e n n -
    z e i c h n e t , daß die Befestigungselemente
    (110, 112) an einem radialen Ansatz (125) in der
    axialmittigen Ebene (E) angeordnet sind.

46. Körper nach einem der Ansprüche 39 bis 45, dadurch g e k e n n z e i c h n e t , daß die Sicherungselemente axiale Rippen (114) an beiden Enden der Nabe (101) sind.

47. Körper nach einem der Ansprüche 34 bis 46, dadurch g e k e n n z e i c h n e t , daß der Faserverbundwerkstoff Glasfasern besitzt.

48. Körper nach einem der Ansprüche 34 bis 46, dadurch g e k e n n z e i c h n e t , daß der Faserverbundwerkstoff Aramid(Keflar (Wz))-Fasern besitzt.

49. Körper nach einem der Ansprüche 34 bis 48, dadurch g e k e n n z e i c h n e t , daß der Faserverbundwerkstoff ein hochfestes, temperaturbeständiges Epoxid-Harz, Polyester-Harz oder Phenol-Harz besitzt.

50. Körper nach einem der Ansprüche 34 bis 49, insbesondere Schienen-, insbesondere Eisenbahn-Rad, mit einem Lauf-Kranz (103a) aus Metall, dadurch g e k e n n z e i c h n e t , daß die Befestigungselemente (110) unmittelbar am Lauf-Kranz (103a) angeordnet sind (Fig. 8).

51. Körper nach einem der Ansprüche 34 bis 49, insbesondere Schienen-, insbesondere Eisenbahn-Rad, dadurch g e k e n n z e i c h n e t , daß die Befestigungselemente (110) an einem vom Lauf-Kranz (103a) gesonderten Metall-Ring (103b) angeordnet sind.

52. Körper nach Anspruch 51, dadurch g e k e n n -
    z e i c h n e t , daß der Lauf-Kranz (103a) auf
    dem Metall-ring (103b) aufgeschrumpft ist.

1/4

FIG. 1

FIG. 1a

FIG. 5

1. LAGE   0°   90°

2. LAGE   +45°   -45°

0°
+45°
90°
-45°

FIG. 2

FIG. 2a

FIG. 3

FIG. 4

FIG. 4 a

FIG. 6

FIG. 7

FIG. 9

FIG. 8

Europäisches
Patentamt

**EUROPÄISCHER RECHERCHENBERICHT**

0065086

Nummer der Anmeldung

EP 82 10 1982

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 380 267 (GKN)<br><br>* Vollständiger Text; Figuren 1,2 * | 1,11,<br>12,19,<br>23,28,<br>30,31 | B 60 B 5/02<br>B 60 B 17/00<br>B 60 B 3/08<br>F 16 C 15/00 |
| | --- | | |
| X | DE-A-2 411 429 (GAGEBY)<br><br>* Vollständiger Text; Figuren 1-27 * | 1,28,<br>29,31,<br>34,35,<br>43,47,<br>49 | |
| | --- | | |
| X | DE-C- 43 128 (PECKHAM)<br>* Vollständiger Text; Figuren 1-3 * | 1,4,8 | |
| | --- | | RECHERCHIERTE SACHGEBIETE (Int. Cl. 3) |
| X | US-A-4 200 326 (WILCOX)<br><br>* Spalte 4, Zeilen 7-44; Figuren 1-5 * | 1,3,7,<br>8,15 | B 60 B 3<br>B 60 B 5<br>B 60 B 17 |
| | --- | | |
| X | US-A-3 357 747 (ELDRED)<br>* Vollständiger Text; Figuren 1,2 * | 1-3,27 | |
| | --- | | |
| X | US-A-3 369 843 (PREW)<br><br>* Vollständiger Text; Figuren 1-7 * | 1,16,<br>24,28,<br>29 | |
| | --- | | |
| | -/- | | |

Der vorliegende Recherchenbericht wurde für alle Patentansprüche erstellt.

| Recherchenort | Abschlußdatum der Recherche | Prüfer |
|---|---|---|
| DEN HAAG | 13-09-1982 | AYITER I. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

0065086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 509 614 (ELDRED) <br> * Vollständiger Text; Figuren 1,2 * <br><br> --- | 1,23 | |
| A | CH-A- 219 565 <br> (DYNAMIT-AKTIENGESELLSCHAFT) <br> * Seite 2, Zeilen 17-74; Figuren 1-4 * <br><br> --- | 1,3 | |
| A | DE-C- 358 471 (BROULHIET) <br><br> * Seite 1, Zeilen 30-50; Figur 1 * <br><br> --- | 1,31, 32 | |
| A | FR-A-2 265 555 (MICHELIN) <br><br> * Vollständiger Text; Figuren 1-5 * <br><br> --- | 1,23, 29,30, 34 | |
| A | AT-A- 229 018 (EISENWERK ROTHE) <br> * Vollständiger Text; Figuren 1-18 * <br><br> --- | 1,34, 47 | |
| A | US-A-3 811 737 (LEJEUNE) <br> * Spalte 2, Zeilen 34-40; Figuren 1,2 * <br><br> ----- | 24 | |

RECHERCHIERTE SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 13-09-1982 | Prüfer <br> AYITER I. |
|---|---|---|